# EUROPEAN PATENT APPLICATION

(11) **EP 4 427 877 A1**
(43) Date of publication of application: **11.09.2024**
(21) Application number: 23832948.6
(22) Date of filing: 10.01.2023
(51) Int. Cl.: B23K 26/02, B23K 31/02, B23Q 7/16

(54) **WELDING TOOL AND WELDING APPARATUS**

(71) Applicant: Contemporary Amperex Technology Co., Limited, Ningde, Fujian 352100 (CN)
(72) Inventor: WANG, Wenchong, Ningde, Fujian 352100 (CN); LIU, Yuwen, Ningde, Fujian 352100 (CN)
(74) Representative: Gong, Jinping
(86) International application number: PCT/CN2023/071538
(87) International publication number: WO 2024/148505

(57) **Abstract**

A welding tooling and a welding device are provided. The welding tooling includes: a carrier; a first driving assembly disposed on the carrier; a first guide rail disposed on the carrier and extending along a first direction; a first slider slidably assembled with the first guide rail and configured to be driven by the first driving assembly to move along the first guide rail; and a plurality of welding tip assemblies arranged in an array, wherein at least one column of welding tip assemblies arranged in a second direction in the plurality of welding tip assemblies is assembled on the first slider and is configured to move along with the first slider to change a spacing from other columns of welding tip assemblies, wherein the second direction intersects the first direction.

## Description

### Technical Field

The present disclosure relates to the technical field of welding, and in particular to a welding tooling and a welding device.

### Background Art

With the rapid development of the battery industry in recent years, the requirements for automatic battery production equipment are getting higher and higher, and the requirements for manufacturing efficiency and quality are becoming more and more stringent. In an automatic battery production process, a welding procedure, as a commonly used production procedure, has an extremely important impact on the production efficiency and production quality of batteries.

### Summary of the Invention

The present disclosure is intended to at least solve one of the technical problems existed in the related art. Therefore, an objective of the present disclosure is to provide a welding tooling and a welding device.

An embodiment of a first aspect of the present disclosure provides a welding tooling including: a carrier; a first driving assembly disposed on the carrier; a first guide rail disposed on the carrier and extending along a first direction; a first slider slidably assembled with the first guide rail and configured to be driven by the first driving assembly to move along the first guide rail; and a plurality of welding tip assemblies arranged in an array, wherein at least one column of welding tip assemblies arranged in a second direction in the plurality of welding tip assemblies is assembled on the first slider and is configured to move along with the first slider to change a spacing from other columns of welding tip assemblies, wherein the second direction intersects the first direction.

When the specifications of the product are adjusted and a spacing among multiple welding areas along the first direction changes, by adopting the welding tooling of the embodiment of the present disclosure, a spacing among some welding tip assemblies along the first direction can be quickly adjusted by controlling the first driving assembly, so that the arrangement of the welding tip assemblies can quickly adapt to specification adjustment of the product. Therefore, the welding tooling of the embodiment of the present disclosure can be compatible with welding requirements of products of various specifications, thereby greatly reducing the use cost of the welding device.

In some embodiments, the welding tooling includes: a second driving assembly disposed on the carrier; a second guide rail disposed on the carrier and extending along a second direction; and a second slider slidably assembled with the second guide rail and configured to be driven by the second driving assembly to move along the second guide rail; wherein, at least one row of welding tip assemblies arranged in the first direction in the plurality of welding tip assemblies is fitted on the second slider, and is configured to move along with the second slider to change the spacing from other rows of welding tip assemblies.

The welding tooling of the embodiment of the present disclosure can quickly adjust the spacing among some welding tip assemblies along the first direction by controlling the first driving assembly, and quickly adjust the spacing among some welding tip assemblies along the second direction by controlling the second driving assembly, so that the arrangement of the welding tip assemblies can quickly adapt to the specification adjustment of the product. Therefore, the welding tooling of the embodiment of the present disclosure can be compatible with welding requirements of batteries of various specifications, thereby greatly reducing the use cost of the welding device.

In some embodiments, the second slider is provided with a third guide rail extending along the first direction, and the first slider is provided with a fourth guide rail extending along the second direction; the plurality of welding tip assemblies include a first welding tip assembly of which the position is adjustable along both the first direction and the second direction, a second welding tip assembly of which the position is adjustable only along the first direction, a third welding tip assembly of which the position is adjustable only along the second direction, and a fourth welding tip assembly of which the position is not adjustable along both the first direction and the second direction, wherein the first welding tip assembly is slidably assembled with the third guide rail and the fourth guide rail, the second welding tip assembly is fixedly assembled with the first slider, the third welding tip assembly is fixedly assembled with the second slider, and the fourth welding tip assembly is fixedly disposed below the carrier and is independent from the first slider and the second slider.

By adopting this embodiment of the present disclosure, the arrangement of a plurality of welding tip assemblies of the welding tooling can be flexibly designed according to product requirements. For example, a plurality of welding tip assemblies can be designed in arrangement of a 2 × 2 array, a 2 × 3 array, or a 3 × 3 array etc.

In some embodiments, the first driving assembly includes a first driving device and a first lead screw that is connected to the first driving device in a transmission mode, and the first slider is configured to be driven by the first lead screw to move along the first guide rail; and the second driving assembly includes a second driving device and a second lead screw that is connected to the second driving device in a transmission mode, and the second slider is configured to be driven by the second lead screw to move along the second guide rail. The role of the lead screw is to convert the rotary motion output by the driving device into linear motion, which has the characteristics of high transmission precision and high efficiency.

In some embodiments, the welding tooling includes one first slider and one second slider, and a plurality of welding tip assemblies arranged in a 2 × 2 array, which are respectively the first welding tip assembly, the third welding tip assembly, the fourth welding tip assembly, and the second welding tip assembly arranged clockwise or counterclockwise. The welding tooling of this design can weld 2 × 2 welding areas in batches, and has a simple structural design and relatively high flexibility of use.

In some embodiments, the welding tooling includes two first sliders and one second slider; a screw rod of the first lead screw includes a first forward thread section and a first reverse thread section, the two first sliders are assembled on the first forward thread section and the first reverse thread section in one-to-one correspondence; and the plurality of welding tip assemblies are arranged in a 2 × 3 array, which are respectively a first one of the first welding tip assemblies, the third welding tip assembly, a second one of the first welding tip assemblies, a first one of the second welding tip assemblies, the fourth welding tip assembly and a second one of the second welding tip assemblies arranged clockwise or counterclockwise. The welding tooling of this design can weld 2 × 3 welding areas in batches, and has a simple structural design, high welding efficiency and relatively high flexibility of use.

In some embodiments, the welding tooling includes two first sliders and one second slider; a screw rod of the first lead screw includes a first screw pitch section and a second screw pitch section with different screw pitches, and the two first sliders are assembled on the first screw pitch section and the second screw pitch section in one-to-one correspondence; and the plurality of welding tip assemblies are arranged in a 2 × 3 array, which are respectively a first one of the first welding tip assemblies, a second one of the first welding tip assemblies, the third welding tip assembly, the fourth welding tip assembly, a first one of the second welding tip assemblies and a second one of the second welding tip assemblies arranged clockwise or counterclockwise. The welding tooling of this design can weld 2 × 3 welding areas in batches, and has a simple structural design, high welding efficiency and relatively high flexibility of use.

In some embodiments, the welding tooling includes two first sliders and two second sliders; a screw rod of the first lead screw includes a first forward thread section and a first reverse thread section, and the two first sliders are assembled on the first forward thread section and the first reverse thread section in one-to-one correspondence; a screw rod of the second lead screw includes a second forward thread section and a second reverse thread section, and the two second sliders are assembled on the second forward thread section and the second reverse thread section in one-to-one correspondence; and the plurality of welding tip assemblies are arranged in a 3 × 3 array, which are respectively a first one of the first welding tip assemblies, a first one of the third welding tip assemblies, a second one of the first welding tip assemblies, a first one of the second welding tip assemblies, a third one of the first welding tip assemblies, a second one of the third welding tip assemblies, a fourth one of the first welding tip assemblies, a second one of the second welding tip assemblies, and the fourth welding tip assembly located at the center of a matrix, that are arranged clockwise or counterclockwise. The welding tooling of this design can weld 3 × 3 welding areas in batches, and has relatively high welding efficiency.

In some embodiments, the welding tooling includes two first sliders and two second sliders; a screw rod of the first lead screw includes a first screw pitch section and a second screw pitch section with different screw pitches, and the two first sliders are assembled on the first screw pitch section and the second screw pitch section in one-to-one correspondence; a screw rod of the second lead screw includes a third screw pitch section and a fourth screw pitch section with different screw pitches, and the two second sliders are assembled on the third screw pitch section and the fourth screw pitch section in one-to-one correspondence; and the plurality of welding tip assemblies are arranged in a 3 × 3 array, which are respectively a first one of the first welding tip assemblies, a second one of the first welding tip assemblies, a first one of the third welding tip assemblies, a second one of the third welding tip assemblies, the fourth welding tip assembly, a first one of the second welding tip assemblies, a second one of the second welding tip assemblies, a third one of the first welding tip assemblies, and a fourth one of the first welding tip assemblies located at the center of a matrix, that are arranged clockwise or counterclockwise. The welding tooling of this design can weld 3 × 3 welding areas in batches, and has relatively high welding efficiency.

In some embodiments, each of the plurality of welding tip assemblies includes a mounting base, a welding tip body connected to the mounting base, and a dust extraction pipe connected to the welding tip body and in communication with an inner cavity of the welding tip body. The design of this embodiment not only helps to save mounting space, but also helps to reduce the loss of air volume, so that a greater wind speed can be obtained, so as to improve the effect of dust extraction and improve the quality of welding.

In some embodiments, the dust extraction pipe is connected to the welding tip body through a fastener. The disassembly and assembly between the dust extraction pipe and the welding tip body is convenient and the connection between them is reliable.

In some embodiments, at least one column of welding tip assemblies in the plurality of welding tip assemblies is arranged side by side with the first slider in the first direction, and each welding tip assembly in the at least one column of welding tip assemblies is fitted on the first slider through an adapter member. This design can save the space occupied by the welding tooling in a height direction, and makes the structure of the welding tooling more compact, thereby adapting to a narrower welding space.

In some embodiments, the second slider includes a first portion and a second portion that are oppositely disposed and extend along the second direction, and a third portion that connects the first portion and the second portion and extends along the first direction, and the two second guide rails are disposed above the first portion and the second portion in one-to-one correspondence. The shape design of the second slider in this embodiment is convenient for arranging the second driving assembly, so that the overall structure of the welding tooling is relatively compact. Moreover, the length of the sliding fit between the two second guide rails and the second slider can be designed to be relatively longer, which can also provide more balanced and smooth guidance while improving the compactness of the structure.

In some embodiments, the welding tooling includes: two pads that are disposed opposite to each other and fixedly disposed below the carrier, and the two second guide rails are disposed below the two pads in a one-to-one correspondence. The two pads are supported between the carrier and the second slider at intervals, which facilitates the installation and horizontal adjustment of the second slider, and can reliably support the second slider and a weight carried by the second slider.

An embodiment of a second aspect of the present disclosure provides a welding device including the welding tooling of any of the preceding embodiments. Since the spacing-variable design is adopted among the welding tip assemblies of the welding tooling of the welding device, the welding device can be compatible with the welding requirements of products of various specifications, thereby greatly reducing the use cost of the welding device.

By adopting the welding tooling or welding device of the embodiment of the present disclosure, the spacing among some welding tip assemblies along the first direction can be quickly adjusted by controlling the first driving mechanism, and in some embodiments, the spacing among some welding tip assemblies along the second direction can also be quickly adjusted by controlling the second driving mechanism, so that the arrangement of the welding tip assemblies can quickly adapt to the specification adjustment of the product. Therefore, the welding tooling and welding device of the embodiment of the present disclosure welding device can be compatible with welding requirements of batteries of various specifications, thereby greatly reducing the use cost of the welding device.

The above description is only a summary of the technical solutions of the present disclosure, and in order to understand more clearly the technical means of the present disclosure for implementing in accordance with the contents of the specification, and in order to make the above and other objectives, features and advantages of the present disclosure more apparent and readily understandable, detailed description of the present disclosure are hereby set forth below.

### Description of Drawings

In the drawings, unless otherwise specified, like reference numerals indicate like or similar parts or elements throughout multiple drawings. These drawings are not necessarily drawn to scale. It should be understood that these drawings depict only some embodiments disclosed according to the present disclosure, and should not be regarded as a limitation to the scope of the present disclosure.
FIG. 1 is a simplified structural bottom view of a welding tooling according to some embodiments of the present disclosure;
FIG. 2 is a structural schematic perspective view of the welding tooling according to some embodiments of the present disclosure;
FIG. 3 is a structural schematic perspective view of the welding tooling after a carrier is disassembled, according to some embodiments of the present disclosure;
FIG. 4 is a structural schematic bottom view of the welding tooling after the carrier is disassembled, according to some embodiments of the present disclosure;
FIG. 5A is a schematic diagram of a welding tip assembly of the welding tooling before and after change of spacing according to some embodiments of the present disclosure;
FIG. 5B is a schematic view of a thread structure of a screw rod of a first lead screw of the welding tooling according to some embodiments of the present disclosure;
FIG. 6A is a schematic diagram of the welding tip assembly of the welding tooling before and after change of spacing according to other embodiments of the present disclosure;
FIG. 6B is a schematic view of a thread structure of a screw rod of the first lead screw of the welding tooling according to some other embodiments of the present disclosure;
FIG. 7 is a schematic diagram of a welding tip assembly of the welding tooling before and after change of spacing according to further some other embodiments of the present disclosure;
FIG. 8 is a schematic diagram of a welding tip assembly of the welding tooling before and after change of spacing according to yet further some embodiments of the present disclosure; and
FIG. 9 is a schematic diagram of a welding tip assembly of the welding tooling before and after change of spacing according to still yet further some embodiments of the present disclosure.

Description of reference numerals:
100-welding tooling; 110-carrier; 120-first driving device; 130-firstlead screw; 140-first guide rail;
150-first slider; 151-fourth guide rail; 160-welding tip assembly; 161-mounting base; 162-welding tip body;
163-dust extraction pipe; 1601-first welding tip assembly; 1602-second welding tip assembly; 1603-third welding tip assembly;
1604-fourth welding tip assembly; 170-second driving device; 180-second lead screw; 190-second guide rail;
210-second slider; 220-adapter member; 211-third guide rail; 2101 -first portion; 2102-second portion;
2103-third portion; 13 1-first forward thread section; 132-first reverse thread section; 133-first screw pitch section;
134-second screw pitch section; 230-pad; 123-first driving assembly; 178-second driving assembly.

### Detailed Description

Examples of the technical solutions of the present disclosure will be described in detail below in conjunction with the drawings. The following examples are only used to illustrate the technical solutions of the present disclosure more clearly, and are therefore used only as examples, and should not be used to limit the protection scope of the present disclosure.

Unless otherwise defined, all technical and scientific terms used herein have the same meaning as commonly understood by those skilled in the art to which the present disclosure belongs; the terms used herein are for the purpose of describing specific embodiments only, and are not intended to limit the present disclosure; the terms "including" and "having" and any variations thereof in the description and claims of the present disclosure as well as in the above description of drawings are intended to cover a non-exclusive inclusion.

In the description of the examples of the present disclosure, the technical terms "first", "second", and the like are used only to distinguish between different objects, and are not to be understood as indicating or implying a relative importance or implicitly specifying the number, particular order, or primary and secondary relation of the technical features indicated. In the description of the examples of the present disclosure, the meaning of "plurality of" is two or more, unless otherwise expressly and specifically defined.

Reference herein to "an example" means that a particular feature, structure, or characteristic described in connection with the example can be included in at least one example of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the examples of the present disclosure, the term "and/or" is only an association relationship for describing associated objects, indicating that three relationships may exist. For example, A and/or B may represent three situations: A exists alone, both A and B exist, and B exists alone. In addition, the character "/" herein generally means that the associated objects before and after it are in an "or" relationship.

In the description of the examples of the present disclosure, the term "plurality of" refers to two or more (including two), and similarly, "multiple groups" refers to two or more (including two) groups, and "multiple sheets" refers to two or more (including two) sheets.

In the description of the embodiments of the present disclosure, the technical terms "center", "column direction", "row direction", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on the orientations or positional relationships shown in the drawings, and are intended only to facilitate and simplify the description of the embodiments of the present disclosure, and are not intended to indicate or imply that a device or element referred to must have a particular orientation, be constructed and operated in a particular orientation, and therefore should not be construed as limiting the embodiments of the present disclosure.

In the description of the embodiments of the present disclosure, unless otherwise expressly specified and defined, the technical terms "mounted", "linked", "connected", "fixed", and the like are to be understood broadly, and may, for example, be fixedly connected or detachably connected, or integrated; and may also be mechanically connected or electrically connected; and may be directly linked or indirectly linked through an intermediate medium, and may be internal communication or interaction between two elements. For those of ordinary skills in the art, the specific meanings of the above terms in the embodiments of the present disclosure can be understood according to specific situations.

In the related technology, a battery includes a box body and a plurality of battery cells located in the box body, and the electrode terminals of the plurality of battery cells are welded with connecting elements (e.g., bus bars) to form a series and/or parallel combination manner. In order to improve the efficiency of production, a welding device generally adopts a welding tooling that includes a plurality of welding tips (i.e., an end for performing welding) and a plurality of dust extraction pipes (i.e., an end for performing dust extraction under negative pressure), so that a plurality of battery cells can be welded with connecting elements simultaneously or sequentially by utilizing the plurality of welding tips, and dust can be removed from each welding area by utilizing the plurality of dust extraction pipes during welding, so as not to affect the welding quality due to the presence of foreign matters in the welding area.

The inventors of the present disclosure have learned that in the related art, the installation positions of the welding tips and the dust extraction pipes of the welding tooling on a mounting plate are fixed, so that it cannot be compatible with the welding requirements of batteries of different specifications. Therefore, it is necessary to equip batteries of different specifications with different welding toolings, leading to a relatively high use cost of devices in battery production.

The above is only one welding scenario in battery production. In other scenarios that require batch welding in battery production, for example, the tabs and electrode terminals of battery cells, are generally electrically connected by welding with adaptor pieces, there are also similar aforementioned technical problems in the batch welding of the tabs and the adaptor pieces and the batch welding of the adapter pieces and the electrode terminals.

The inventors of the present disclosure also noticed that in some other technical fields other than the field of battery production, when batch welding is required, the similar technical problems mentioned above also exist.

Based on the above considerations, the inventor provided a welding tooling and a welding device after in-depth research, so as to improve the compatibility of the welding tooling and reduce the use cost of the welding device.

A welding tooling of an embodiment of the present disclosure includes: a carrier; a first driving assembly disposed on the carrier; a first guide rail disposed on the carrier and extending along a first direction; a first slider slidably assembled with the first guide rail and configured to be driven by the first driving assembly to move along the first guide rail; and a plurality of welding tip assemblies arranged in an array, wherein at least one column of welding tip assemblies arranged in a second direction in the plurality of welding tip assemblies is assembled on the first slider, so that the spacing of them from other columns of welding tip assemblies can be changed along with the movement of the first slider, wherein the second direction intersects with the first direction, for example, at an included angle of 90 degrees or at other included angles with the first direction.

When the specifications of the product are adjusted and a spacing among multiple welding areas along the first direction changes, by adopting the welding tooling of the embodiment of the present disclosure, a spacing among some welding tip assemblies along the first direction can be quickly adjusted by controlling the first driving assembly, so that the arrangement of the welding tip assemblies can quickly adapt to specification adjustment of the product. Therefore, the welding tooling of the embodiment of the present disclosure can be compatible with welding requirements of products of various specifications, thereby greatly reducing the use cost of the welding device.

The welding tooling of the embodiment of the present disclosure can be applied to various scenarios that require batch welding in battery production, and can also be applied to other scenarios that require batch welding outside the field of battery production, which is not specifically limited in the present disclosure. The specific type of welding is not limited, for example, it can be arc welding, gas welding, resistance welding, solid phase welding, brazing, electron beam welding, laser welding, thermit welding, induction welding, impact resistance welding, electroslag welding, etc., which can be selected according to specific welding process requirements required for production.

The battery disclosed in the embodiment of the present disclosure can be a power battery or an energy storage battery. Among them, the application scenarios of the power battery include, but are not limited to, vehicles, ships, aircrafts, spacecrafts, electric tools, electric toys, various types of mobile terminals, etc. The application scenarios of the energy storage battery include, but are not limited to, solar power generation systems, hydroelectric power generation systems, wind power generation systems, etc. The battery can be a primary battery that can only be discharged, or a secondary battery that can be repeatedly charged and discharged. The type of the battery may be, for example, a lithium-ion battery, a sodium-ion battery, a hydrogen battery, a vanadium battery, etc., which is not specifically limited in the present disclosure.

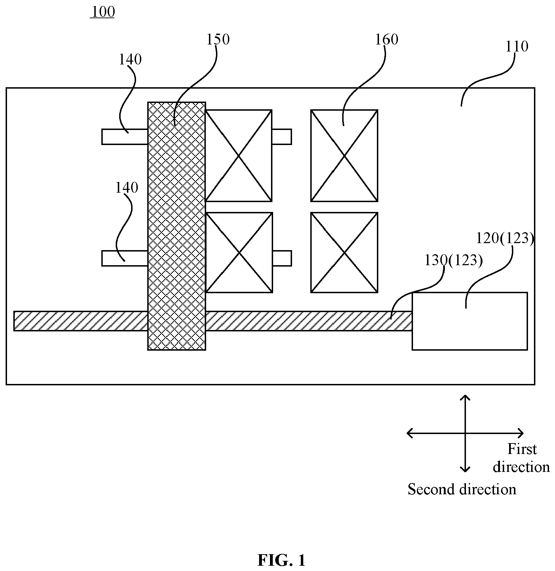

As shown in FIG. 1, a welding tooling 100 provided by an embodiment of the present disclosure includes a carrier 110, a first driving assembly 123, a first guide rail 140, a first slider 150 and a plurality of welding tip assemblies 160 arranged in an array. The first driving assembly 120 is disposed on the carrier 110. The first guide rail 140 is disposed on the carrier 110 and extends along a first direction. The first slider 150 is slidably assembled with the first guide rail 140 and is configured to be driven by the first driving assembly 123 to move along the first guide rail 140. At least one column of welding tip assemblies 160 arranged along the second direction in the plurality of welding tip assemblies 160 is fitted on the first slider 150 and configured to move along with the first slider 150 to change the spacing from other columns of welding tip assemblies 160, wherein, the second direction intersects the first direction.

The welding tooling 100 of the embodiment of the present disclosure, as a portion of a welding device for performing welding, can utilize a plurality of welding tip assemblies 160 to perform welding at multiple locations simultaneously or sequentially and in batches. The carrier 110 serves as a mounting and supporting component of the welding tooling 100, and the first driving assembly 123, the first guide rail 140, the first slider 150, and the welding tip assemblies 160 can be directly or indirectly mounted on the carrier 110.

In some embodiments, the carrier 110 can be plate-shaped, and the first driving assembly 123, the first guide rail 140, the first slider 150, and the welding tip assemblies 160 are disposed below the carrier 110 (as shown in FIG. 1 in an upward state). However, the present disclosure is not limited thereto. In other embodiments, the carrier may also have other relative positional relationships with the first driving assembly, the first guide rail, the first slider, and the welding tip assemblies.

In an embodiment of the present disclosure, taking the welding tooling 100 in a normal working state as a reference, the "upper" of a component refers to the side of the component that is farther away from the welding area, and the "below" of the component refers to the side of the component that is closer to the welding area. The "first direction" and the "second direction" are two intersecting directions, and the included angle between them includes but is not limited to 90 degrees. the plurality of welding tip assemblies 160 are arranged in an array in a plane, and the "row direction" and "column direction" of them are relative terms, wherein the "row direction" can be the same as the direction of the "first direction", and the "column direction" can be the same as the direction of the "second direction".

The present disclosure has no limitation on the specific structural form of the first driving assembly 123. In some embodiments of the present disclosure, as shown in FIG. 1, the first driving assembly 123 includes a first driving device 120 and a first lead screw 130 that is connected to the first driving device 120 in a transmission mode, and the first slider 150 is configured to be driven by the first lead screw 130 to move along the first guide rail 140. The lead screw is also referred to as guide screw, and the role of it is to convert the rotary motion output by the driving device into linear motion, which has the characteristics of high transmission precision and high efficiency.

The first driving device 120 is used as a power source of the welding tooling 100, its specific type is not limited, and a servo motor or a stepping motor can be adopted. A servo motor refers to a motor that controls the operation of mechanical elements in a servo system, and is an indirect speed-transmission device that subsidizes a motor. A stepper motor is a motor that converts an electrical pulse signal into a corresponding angular displacement or linear displacement (converted into the angular displacement in the embodiment of the present disclosure).

In an embodiment of the present disclosure, the assembly between two components may be a direct assembly relationship, or an indirect assembly relationship through an intermediate member. For example, when the first driving device 120 and the like are fixedly disposed below the carrier 110, they may be fixedly connected to the carrier 110 either directly, or indirectly through an intermediate member. The "transmission connection" between two components can be understood as that power transmission can be performed between the two components, and the power transmission between the two components can be performed either directly or indirectly through an intermediate member.

In an embodiment of the present disclosure, the function of the first lead screw 130 is to convert the rotary motion output by the first driving device 120 into a linear motion. Its basic structure includes a screw rod, a nut that converts a motion into a linear motion according to the screw lead of the corresponding specification along with the rotation angle of the screw rod, and a nut seat connected with the nut. A driven member is connected with the nut through the nut seat, so that it can make a corresponding linear motion. In an embodiment of the present disclosure, the specific type of the first lead screw 130 is not limited, and a sliding lead screw or a ball lead screw can be used, wherein the sliding lead screw has the advantages of good transmission performance, high precision, and convenient processing, and the ball lead screw has the advantages of small friction, high transmission efficiency and high precision, and a manufacturing process that is relatively more complicated than that of the sliding lead screw.

The first slider 150 is used as a sliding member in the welding tooling 100, and its specific shape is not limited. For example, it can be designed as a strip as shown in the figure. The first guide rail 140 is used for providing guidance for the movement of the first slider 150 along the first direction, and its specific structure is not limited. For example, it can be designed as a groove guide rail or a ribbed guide rail.

When the specifications of the product are adjusted and a spacing among multiple welding areas along the first direction changes, by adopting the welding tooling 100 of the embodiment of the present disclosure, a spacing among some welding tip assemblies along the first direction can be quickly adjusted by controlling the first driving assembly 123 (e.g., controlling the first driving device 120), so that the arrangement of the welding tip assemblies 160 can quickly adapt to specification adjustment of the product. Therefore, the welding tooling 100 of the embodiment of the present disclosure can be compatible with welding requirements of products of various specifications, thereby greatly reducing the use cost of the welding device.

Taking the scenario of welding the electrode terminals of a plurality of battery cells with connecting elements in batch in battery production as an example, when the specifications of the battery are adjusted and the spacing among the electrode terminals in the first direction changes, by adopting the welding tooling 100 of the embodiment of the present disclosure, the spacing among some welding tip assemblies 160 along the first direction can be quickly adjusted by controlling the first driving assembly 123 (e.g, controlling the first driving device 120), so that the arrangement of the welding tip assemblies 160 can quickly adapt to the specification adjustment of the battery.

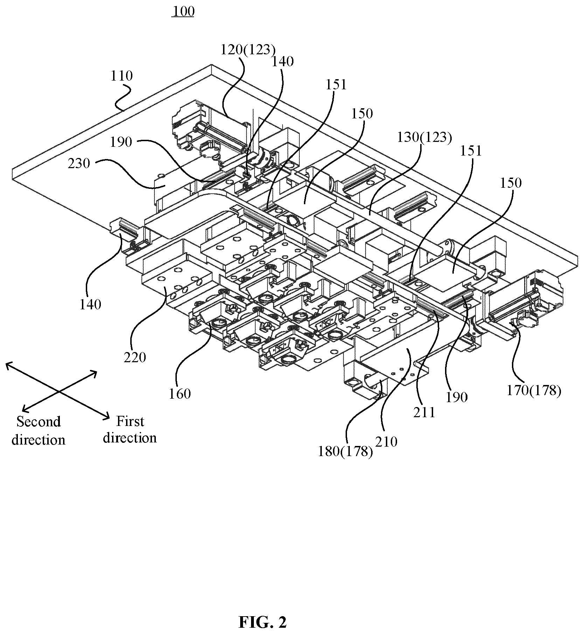

As shown in FIGs. 2, 3, 4 and 5A, some embodiments of the present disclosure provide a welding tooling 100 which is further improved based on the design idea of the embodiment shown in FIG. 1. The welding tooling 100 further includes a second driving assembly 178, a second guide rail 190 and a second slider 210. The second driving assembly 178 is disposed on the carrier 110. The second guide rail 190 is disposed on the carrier 110 and extends along a second direction. The second slider 210 is slidably assembled with the second guide rail 190 and is configured to be driven by the second driving assembly 178 to move along the second guide rail 190. At least one row of welding tip assemblies 160 arranged along the first direction in the plurality of welding tip assemblies 160 is fitted on the second slider 210, and is configured to move along with the second slider 210 to change the spacing from other rows of welding tip assemblies 160, wherein, the second direction intersects the first direction.

As shown in the figure, the second driving assembly 178, the second guide rail 190 and the second slider 210 can be disposed below the carrier 110.

The second driving assembly 178 can refer to the design of the first driving assembly 123. In some embodiments, as shown in the figure, the second driving assembly 178 includes a second driving device 170 and a second lead screw 180 that is connected to the second driving device 170 in a transmission mode, and the second slider 210 is configured to be driven by the second lead screw 180 to move along the second guide rail 190.

The second driving device 170, the second lead screw 180, the second guide rail 190, and the second slider 210 can be selected with reference to the foregoing embodiments and designed accordingly. For example, a servo motor can be selected as the second driving device 170, and a ball lead screw can be selected as the second lead screw 180.

Still taking the scenario of welding the electrode terminals of a plurality of battery cells with connecting elements in batch in battery production as an example, when the specifications of the battery are adjusted and the spacings among the electrode terminals in the first direction and the second direction change, by adopting the welding tooling 100 of the embodiment of the present disclosure, the spacing among some welding tip assemblies 160 along the first direction can be quickly adjusted by controlling the first driving assembly 123 (e.g, controlling the first driving device 120), and the spacing among some welding tip assemblies 160 along the second direction can be quickly adjusted by controlling the second driving assembly 178 (e.g, controlling the second driving device 170), so that the arrangement of the welding tip assemblies 160 can quickly adapt to the specification adjustment of the battery. Therefore, the welding tooling 100 of the embodiment of the present disclosure can be compatible with welding requirements of batteries of various specifications, thereby greatly reducing the use cost of the welding device.

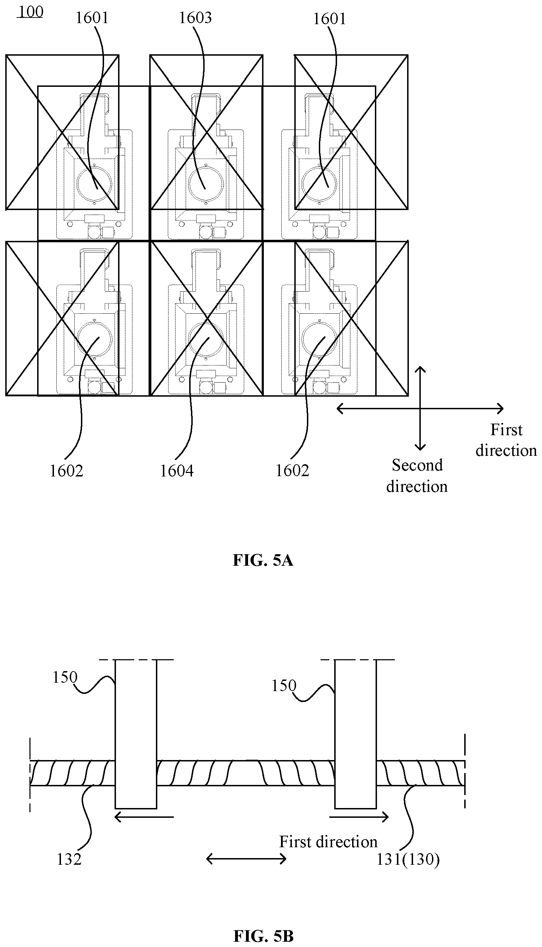

As shown in FIGs. 2, 3 and 4, in some embodiments of the present disclosure, the second slider 210 is provided with a third guide rail 211 extending along the first direction, and the first slider 150 is provided with a fourth guide rail 151 extending along the second direction. As shown in FIG. 5A, the plurality of welding tip assemblies 160 include a first welding tip assembly 1601 of which the position is adjustable along both the first direction and the second direction, a second welding tip assembly 1602 of which the position is adjustable only along the first direction, a third welding tip assembly 1603 of which the position is adjustable only along the second direction, and a fourth welding tip assembly 1604 of which the position is not adjustable along both the first direction and the second direction, wherein the first welding tip assembly 1601 is slidably assembled with the third guide rail 211 and the fourth guide rail 151, the second welding tip assembly 1602 is fixedly assembled with the first slider 150, the third welding tip assembly 1603 is fixedly assembled with the second slider 210, and the fourth welding tip assembly 1604 is fixedly disposed on the carrier 110 and is independent from the first slider 150 and the second slider 210.

The first slider 150 is provided with a fourth guide rail 151, so that the welding tip assembly 160 slidably assembled with the fourth guide rail 151 can not only move along with the first slider 150 in the first direction, but also move along with the second slider 210 in the second direction, direction, Similarly, the second slider 210 is provided with a third guide rail 211, so that the welding tip assembly 160 slidably assembled with the third guide rail 211 can not only move along with the second slider 210 in the second direction, but also move along with the first slider 150 in the first direction. By adopting this embodiment of the present disclosure, the arrangement of a plurality of welding tip assemblies 160 of the welding tooling 100 can be flexibly designed according to product requirements. For example, a plurality of welding tip assemblies 160 can be designed in arrangement of a 2 × 2 array, a 2 × 3 array, or a 3 × 3 array etc.

In some embodiments of the present disclosure, the number of welding areas of the product may be equal to the number of the welding tip assemblies 160 contained in the welding tooling 100. For example, the welding areas of the product are arranged in a 2 × 3 array, and thus, the 2 × 3 welding areas can be welded in batches by adopting the welding tooling 100 of which the welding tip assemblies 160 are arranged in a 2 × 3 array.

In some embodiments of the present disclosure, the number of welding areas of the product may also be greater than the number of the welding tip assemblies 160 contained in the welding tooling 100. For example, the welding areas of the product are arranged in a 2 × 9 array, and thus, the 2 × 9 welding areas can be welded in batches sequentially by adopting the welding tooling 100 of which the welding tip assemblies 160 are arranged in a 2 × 3 array for three times.

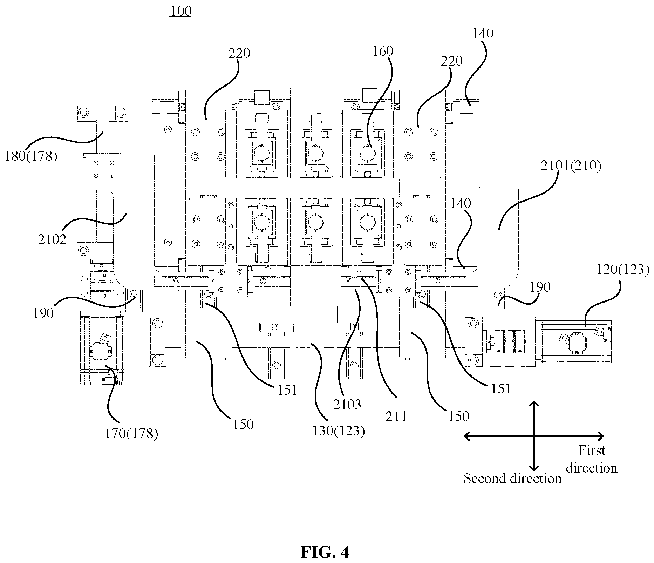

As shown in FIGs. 4 and 5A, in some embodiments of the present disclosure, the welding tooling 100 includes two first sliders 150 and one second slider 210. As shown in FIG. 5B, a screw rod of the first lead screw 130 includes a first forward thread section 131 and a first reverse thread section 132, and the two first sliders 150 are assembled on the first forward thread section 131 and the first reverse thread section 132 in one-to-one correspondence. the plurality of welding tip assemblies 160 are arranged in a 2 × 3 array, which are respectively a first one of the first welding tip assemblies 1601 (being slidably assembled with the third guide rail 211 of the second slider 210 and the fourth guide rail 151 of a first one of the first sliders 150, and its position being adjustable along both the first direction and the second direction), the third welding tip assembly 1603 (being fixedly assembled with the second slider 210, and its position being adjustable only along the second direction), a second one of the first welding tip assemblies 1601 (being slidably assembled with the third guide rail 211 of the second slider 210 and the fourth guide rail 151 of a second one of the first sliders 150, and its position being adjustable along both the first direction and the second direction), a first one of the second welding tip assemblies 1602 (being fixedly assembled with the second one of the first sliders 150, and its position being adjustable only along the first direction), the fourth welding tip assembly 1604 (being fixedly disposed on the carrier 110 and independent of the two first sliders 150 and the second slider 210, and its position being not adjustable along both the first direction and the second direction), and a second one of the second welding tip assemblies 1602 (being fixedly assembled with the first one of the first sliders 150, and its position being adjustable only along the first direction) arranged clockwise or counterclockwise (arranged clockwise in this embodiment).

In this embodiment, the screw rod of the first lead screw 130 includes two portions with opposite thread directions, so that the two first sliders 150 can be driven to move toward each other to reduce the spacing of a first column of welding tip assemblies 160 and a third column of welding tip assemblies 160 from a second column of welding tip assemblies 160, and the two first sliders 150 can be driven to move away from each other to increase the spacing of the first column of welding tip assemblies 160 and the third column of welding tip assemblies 160 from the second column of welding tip assemblies 160. The screw rod of the second lead screw 180 may be a screw rod with an equal screw pitch. That is, the screw pitch (distance between two adjacent threads) is the same throughout the screw rod. The welding tooling of this design 100 can weld 2 × 3 welding areas in batches, and has a simple structural design, high welding efficiency and relatively high flexibility of use.

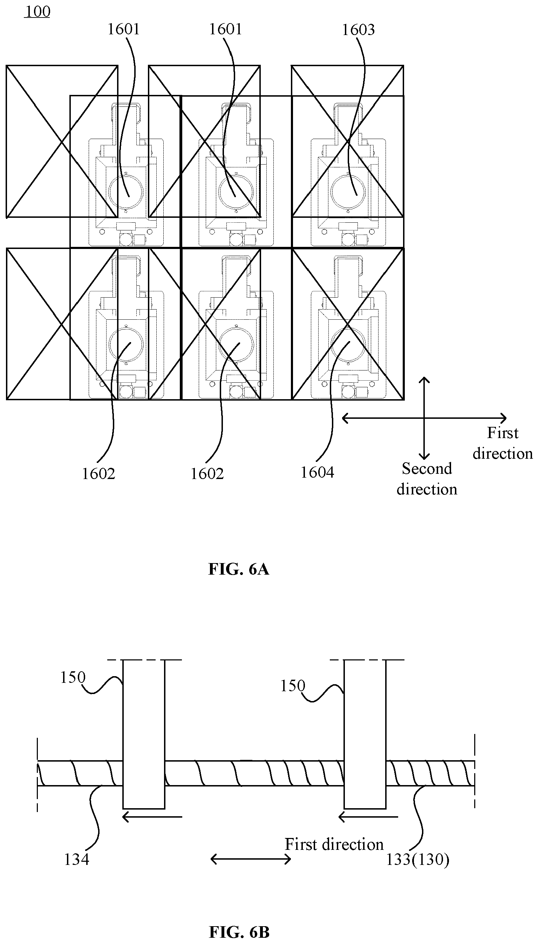

As shown in FIGs. 6A and 6B, in some embodiments of the present disclosure, the welding tooling 100 includes two first sliders 150 and one second slider (not shown in the figure), the screw rod of the first lead screw 130 includes a first screw pitch section 133 and a second screw pitch section 134 with different screw pitches, and the two first sliders 150 are assembled on the first screw pitch section 133 and the second screw pitch section 134 in one-to-one correspondence. the plurality of welding tip assemblies 160 are arranged in a 2 × 3 array, which are respectively a first one of the first welding tip assemblies 1601 (being slidably assembled with the third guide rail of the second slider and the fourth guide rail of a first one of the first sliders 150, and its position being adjustable along both the first direction and the second direction), a second one of the first welding tip assemblies 1601 (being slidably assembled with the third guide rail of the second slider and the fourth guide rail of a second one of the first sliders 150, and its position being adjustable along both the first direction and the second direction), the third welding tip assembly 1603 (being fixedly assembled with the second slider, and its position being adjustable only along the second direction), the fourth welding tip assembly 1604 (being fixedly disposed on the carrier (not shown in the figure) and independent of the two first sliders 150 and the second slider, and its position being not adjustable along both the first direction and the second direction), a first one of the second welding tip assemblies 1602 (being fixedly assembled with the second one of the first sliders 150, and its position being adjustable only along the first direction), and a second one of the second welding tip assemblies 1602 (being fixedly assembled with the first one of the first sliders 150, and its position being adjustable only along the first direction) arranged clockwise or counterclockwise (arranged clockwise in this embodiment).

In this embodiment, a screw rod of the first lead screw 130 includes two portions with unequal screw pitches, so that the two first sliders 150 can be driven to move in the same direction at appropriate different speeds to adjust the spacing among the 3 columns of welding tip assemblies 160. A screw rod of the second lead screw (not shown in the figure) may be a screw rod with an equal screw pitch. The welding tooling of this design 100 can weld 2 × 3 welding areas in batches, and has a simple structural design, high welding efficiency and relatively high flexibility of use.

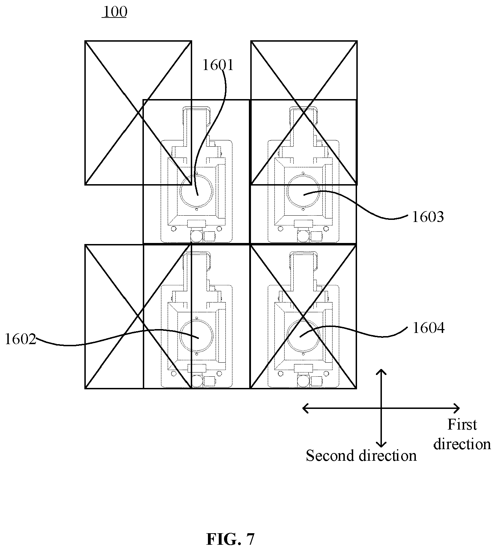

As shown in FIG. 7, in some embodiments of the present disclosure, the welding tooling 100 includes one first slider (not shown in the figure) and one second slider (not shown in the figure), the plurality of welding tip assemblies 160 are arranged in a 2 × 2 array, which are respectively a first one of the first welding tip assemblies 1601 (being slidably assembled with the third guide rail of the second slider and the fourth guide rail of a first slider, and its position being adjustable along both the first direction and the second direction), a third welding tip assembly 1603 (being fixedly assembled with the second slider, and its position being adjustable only along the second direction), a fourth welding tip assembly 1604 (being fixedly disposed on the carrier (not shown in the figure) and independent of the first slider and the second slider, and its position being not adjustable along both the first direction and the second direction), and a second welding tip assembly 1602 (being fixedly assembled with the first slider, and its position being adjustable only along the first direction) arranged clockwise or counterclockwise (arranged clockwise in this embodiment).

In this embodiment, the screw rods of the first lead screw (not shown in the figure) and the second lead screw (not shown in the figure) may each be a screw rod with an equal screw pitch. The welding tooling 100 of this design can weld 2 × 2 welding areas in batches, and has a simple structural design and relatively high flexibility of use.

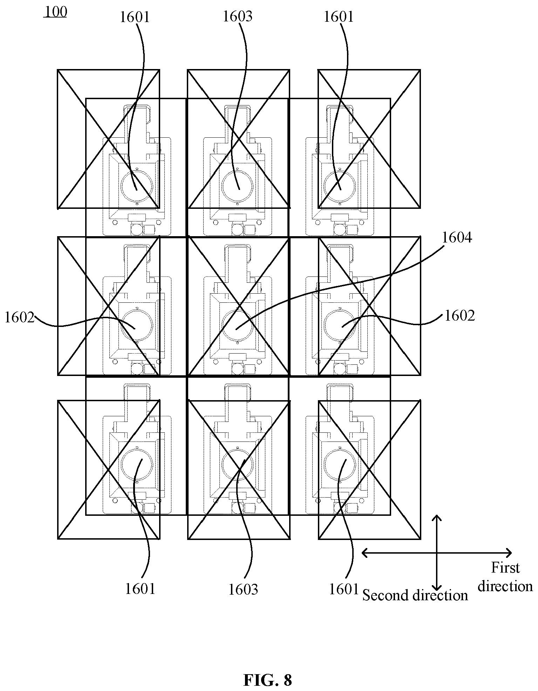

As shown in FIG. 8, in some embodiments of the present disclosure, the welding tooling 100 includes two first sliders (not shown in the figure) and two second sliders (not shown in the figure); a screw rod of the first lead screw (not shown in the figure) includes a first forward thread section and a first reverse thread section, and the two first sliders are assembled on the first forward thread section and the first reverse thread section in one-to-one correspondence; a screw rod of the second lead screw (not shown in the figure) includes a second forward thread section and a second reverse thread section, and the two second sliders are assembled on the second forward thread section and the second reverse thread section in one-to-one correspondence. the plurality of welding tip assemblies 160 are arranged in a 3 × 3 array, which are respectively a first one of the first welding tip assemblies 1601 (being slidably assembled with the third guide rail of a first one of the second sliders and the fourth guide rail of a first one of the first sliders, and its position being adjustable along both the first direction and the second direction), a first one of the third welding tip assemblies 1603 (being fixedly assembled with the first one of the second sliders, and its position being adjustable only along the second direction), a second one of the first welding tip assemblies 1601 (being slidably assembled with the third guide rail of the first one of the second sliders and the fourth guide rail of a second one of the first sliders, and its position being adjustable along both the first direction and the second direction), a first one of the second welding tip assemblies 1602 (being fixedly assembled with the second one of the first sliders, and its position being adjustable only along the first direction), a third one of the first welding tip assemblies 1601 (being slidably assembled with the third guide rail of a second one of the second sliders and the fourth guide rail of the second one of the first sliders, and its position being adjustable along both the first direction and the second direction), a second one of the third welding tip assemblies 1603 (being fixedly assembled with the second one of the second sliders, and its position being adjustable only along the second direction), a fourth one of the first welding tip assemblies 1601 (being slidably assembled with the third guide rail of the second one of the second sliders and the fourth guide rail of the first one of the first sliders, and its position being adjustable along both the first direction and the second direction), a second one of the second welding tip assemblies 1602 (being fixedly assembled with the first one of the first sliders, and its position being adjustable only along the first direction), and the fourth welding tip assembly 1604 (being fixedly disposed on the carrier (not shown in the figure) and independent of the two first sliders and the two second sliders, and its position being not adjustable along both the first direction and the second direction) located at the center of a matrix, arranged clockwise or counterclockwise (arranged clockwise in this embodiment).

In this embodiment, the screw rod of the first lead screw includes two portions with opposite thread directions, so that the two first sliders can be driven to move toward each other to reduce the spacing of a first column of welding tip assemblies 160 and a third column of welding tip assemblies 160 from a second column of welding tip assemblies 160, and the two first sliders can be driven to move away from each other to increase the spacing of the first column of welding tip assemblies 160 and the third column of welding tip assemblies 160 from the second column of welding tip assemblies 160. The screw rod of the second lead screw includes two portions with opposite thread directions, so that the two second sliders can be driven to move toward each other to reduce the spacing of a first row of welding tip assemblies 160 and a third row of welding tip assemblies 160 from a second row of welding tip assemblies 160, and the two second sliders can be driven to move away from each other to increase the spacing of the first row of welding tip assemblies 160 and the third row of welding tip assemblies 160 from the second row of welding tip assemblies 160. The welding tooling 100 of this design can weld 3 × 3 welding areas in batches, and has relatively high welding efficiency.

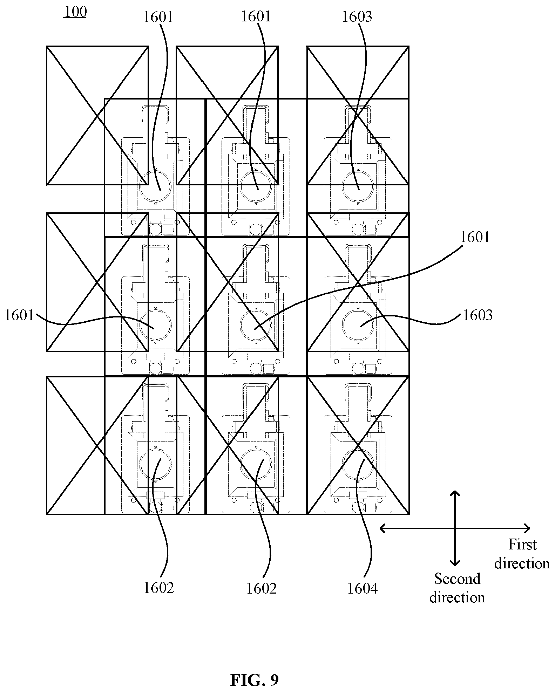

As shown in FIG. 9, in some embodiments of the present disclosure, the welding tooling 100 includes two first sliders (not shown in the figure) and two second sliders (not shown in the figure); a screw rod of the first lead screw (not shown in the figure) includes a first screw pitch section and a second screw pitch section with different screw pitches, and the two first sliders are assembled on the first screw pitch section and the second screw pitch section in one-to-one correspondence; a screw rod of the second lead screw (not shown in the figure) includes a third screw pitch section and a fourth screw pitch section with different screw pitches, and the two second sliders are assembled on the third screw pitch section and the fourth screw pitch section in one-to-one correspondence. the plurality of welding tip assemblies 160 are arranged in a 3 × 3 array, which are respectively a first one of the first welding tip assemblies 1601 (being slidably assembled with the third guide rail of a first one of the second sliders and the fourth guide rail of a first one of the first sliders, and its position being adjustable along both the first direction and the second direction), a second one of the first welding tip assemblies 1601 (being slidably assembled with the third guide rail of the first one of the second sliders and the fourth guide rail of a second one of the first sliders, and its position being adjustable along both the first direction and the second direction), a first one of the third welding tip assemblies 1603 (being fixedly assembled with the first one of the second sliders, and its position being adjustable only along the second direction), a second one of the third welding tip assemblies 1603 (being fixedly assembled with a second one of the second sliders, and its position being adjustable only along the second direction), the fourth welding tip assembly 1604 (being fixedly disposed on the carrier (not shown in the figure) and independent of the two first sliders and the two second sliders, and its position being not adjustable along both the first direction and the second direction), a first one of the second welding tip assemblies 1602 (being fixedly assembled with the second one of the first sliders, and its position being adjustable only along the first direction), a second one of the second welding tip assemblies 1602 (being fixedly assembled with the first one of the first sliders, and its position being adjustable only along the first direction), a third one of the first welding tip assemblies 1601 (being slidably assembled with the third guide rail of the second one of the second sliders and the fourth guide rail of the first one of the first sliders, and its position being adjustable along both the first direction and the second direction), and a fourth one of the first welding tip assemblies 1601 (being slidably assembled with the third guide rail of the second one of the second sliders and the fourth guide rail of the second one of the first sliders, and its position being adjustable along both the first direction and the second direction) located at the center of a matrix, arranged clockwise or counterclockwise (arranged clockwise in this embodiment).

In this embodiment, a screw rod of the first lead screw includes two portions with unequal screw pitches, so that the two first sliders can be driven to move in the same direction at appropriate different speeds to adjust the spacing among the 3 columns of welding tip assemblies 160; and a screw rod of the second lead screw includes two portions with unequal screw pitches, so that the two second sliders can be driven to move in the same direction at appropriate different speeds, so as to adjust the spacing among the 3 rows of welding tip assemblies. The welding tooling 100 of this design can weld 3 × 3 welding areas in batches, and has relatively high welding efficiency.

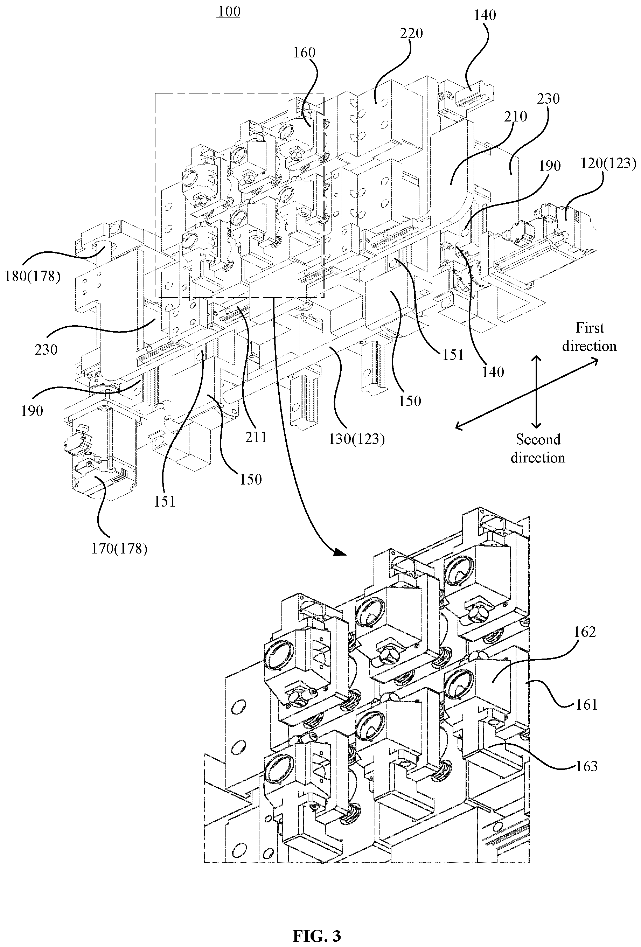

As shown in FIG. 3, in some embodiments of the present disclosure, each welding tip assembly 160 includes a mounting base 161, a welding tip body 162 connected to the mounting base 161, and a dust extraction pipe 163 connected to the welding tip body 162 and in communication with an inner cavity of the welding tip body 162.

The welding tip body 162 is an end of the welding device for performing welding, and is usually made of copper, so it is also commonly called a "copper tip". Depending on difference in the specific type of welding, the inner cavity of the welding tip body 162 can be designed with passages for a laser, brazing material or thermal agent to pass through, and the present disclosure has no limitation on the specific structure of the welding tip body 162. The mounting base 161 can facilitate the installation of the welding tip body 162, and the welding tip body 162 and the mounting base 161 can be fixedly connected through a fastener (e.g., a screw or bolt, etc.), which are convenient to disassemble and reliable in connection.

The dust extraction pipe 163 is an end for performing dust extraction under negative pressure. In this embodiment of the present disclosure, the dust extraction pipe 163 is connected to the welding tip body 162 and communicated with the inner cavity of the welding tip body 162, so as to remove dust from the welding area through the action of the negative pressure, avoiding from affecting the quality of welding due to foreign matters existed in the welding area. The dust extraction pipe 163 may be fixedly connected with the welding tip body 162 through a fastener (e.g., a screw or bolt, etc.), or may be connected by welding, which is not specifically limited in the present disclosure.

In this embodiment of the present disclosure, the dust extraction pipe 163 is connected with the welding tip body 162. That is, it is integrated with the welding tip body 162. In this way, it not only helps to save mounting space, but also helps to reduce the loss of air volume, so that a greater wind speed can be obtained, so as to improve the effect of dust extraction and improve the quality of welding.

As shown in FIGs. 3 and 4, in some embodiments, at least one column of welding tip assemblies 160 of the welding tooling 100 is arranged side by side with the first slider 150 in the first direction, and each welding tip assembly 160 in the at least one column of welding tip assemblies 160 is fitted on the first slider 150 through an adapter member 220.

This design can save the space occupied by the welding tooling 100 in a height direction, and makes the structure of the welding tooling 100 more compact, thereby adapting to a narrower welding space.

In the embodiment of the present disclosure, the number of the first guide rail 140 and the number of the second guide rail 190 can be respectively designed to be multiple. In this way, a more balanced and smooth guide can be provided for the first slider 150 and the second slider 210, so that the transmission between related components of the welding tooling 100 is more reliable and stable.

As shown in FIG. 4, in some embodiments, the second slider 210 includes a first portion 2101 and a second portion 2102 that are oppositely disposed and extend along the second direction, and a third portion 2103 that connects the first portion 2101 and the second portion 2102 and extends along the first direction, and the two second guide rails 190 are disposed above the first portion 2101 and the second portion 2102 in one-to-one correspondence.

The shape design of the second slider 210 in this embodiment is convenient for arranging the second driving assembly 178, so that the overall structure of the welding tooling 100 is relatively compact. Moreover, the length of the sliding fit between the two second guide rails 190 and the second slider 210 can be designed to be relatively longer, which can also provide more balanced and smooth guidance while improving the compactness of the structure.

As shown in FIGs. 2 and 3, in some embodiments, the welding tooling 100 further includes: two pads 230 that are disposed opposite to each other and fixedly disposed below the carrier 110, and the two second guide rails 190 are disposed below the two pads 230 in a one-to-one correspondence.

The two pads 230 may be strip-shaped, and are fixedly connected to the carrier 110 through a fastener. The two pads 230 are supported between the carrier 110 and the second slider 210 at intervals, which facilitates the installation and horizontal adjustment of the second slider 210, and can reliably support the second slider 210 and a weight carried by the second slider 210.

As shown in FIGs. 2, 3, 4 and 5A, the welding tooling 100 provided by some embodiments of the present disclosure includes a carrier 110, a first driving assembly 123, a second driving assembly 178, a first guide rail 140, a second guide rail 190, a first slider 150, a second slider 210, and a plurality of welding tip assemblies 160 arranged in an array. The first driving assembly 123 includes a first driving device 120 and a first lead screw 130. The second driving assembly 178 includes a second driving device 170 and a second lead screw 180. The first driving device 120 and the second driving device 170 can be fixedly disposed below the carrier 110. The first lead screw 130 is disposed below the carrier 110 and extends along the first direction, and is connected to the first driving device 120 in a transmission mode. The second lead screw 180 is disposed below the carrier 110 and extends along the second direction, and is connected to the second driving device 170 in a transmission mode. The first guide rail 140 is fixedly disposed below the carrier 110 and extends along the first direction, and the second guide rail 190 is fixedly disposed below the carrier 110 and extends along the second direction. The first slider 150 is slidably assembled with the first guide rail 140 and is connected to the first lead screw 130 in a transmission mode, and the second slider 210 is slidably assembled with the second guide rail 190 and is connected to the second lead screw 180 in a transmission mode.

At least one column of welding tip assemblies 160 arranged along the second direction in the plurality of welding tip assemblies 160 is fitted on the first slider 150 and configured to move along with the first slider 150 to change the spacing from other columns of welding tip assemblies 160. At least one row of welding tip assemblies 160 arranged along the first direction in the plurality of welding tip assemblies 160 is fitted on the second slider 210, and is configured to move along with the second slider 210 to change the spacing from other rows of welding tip assemblies 160, wherein, the second direction intersects the first direction. In this embodiment, the second slider 210 is provided with a third guide rail 211 extending along the first direction, and the first slider 150 is provided with a fourth guide rail 151 extending along the second direction. As shown in FIG. 5A, the plurality of welding tip assemblies 160 include a first welding tip assembly 1601 of which the position is adjustable along both the first direction and the second direction, a second welding tip assembly 1602 of which the position is adjustable only along the first direction, a third welding tip assembly 1603 of which the position is adjustable only along the second direction, and a fourth welding tip assembly 1604 of which the position is not adjustable along both the first direction and the second direction, wherein the first welding tip assembly 1601 is slidably assembled with the third guide rail 211 and the fourth guide rail 151, the second welding tip assembly 1602 is fixedly assembled with the first slider 150, the third welding tip assembly 1603 is fixedly assembled with the second slider 210, and the fourth welding tip assembly 1604 is fixedly disposed below the carrier 110 and is independent from the first slider 150 and the second slider 210.

Among the plurality of welding tip assemblies 160, each welding tip assembly 160 includes a mounting base 161, a welding tip body 162 connected to the mounting base 161, and a dust extraction pipe 163 connected to the welding tip body 162 and in communication with an inner cavity of the welding tip body 162. At least one column of welding tip assemblies 160 of the welding tooling 100 is arranged side by side with the first slider 150 in the first direction, and each welding tip assembly 160 in the at least one column of welding tip assemblies 160 is fitted on the first slider 150 through an adapter member 220.

For the welding tooling 100 of this embodiment of the present disclosure, on one hand, a spacing-variable design among the welding tip assemblies 160 is adopted, so that the welding device can be compatible with the welding requirements of products of various specifications, thereby greatly reducing the use cost of the welding device; on the other hand, the integrated design of the dust extraction pipe 163 and the welding tip body 162 not only helps to save mounting space, but also helps to reduce the loss of air volume, so that a greater wind speed can be obtained, so as to improve the effect of dust extraction and improve the quality of welding.

An embodiment of the present disclosure further provide a welding device including the welding tooling 100 of any of the preceding embodiments. The specific type of the welding device is not limited, and for example, it may be an arc welding device, a gas welding device, a brazing device, a laser welding device, etc.

Since the spacing-variable design is adopted among the welding tip assemblies 160 of the welding tooling 100 of the welding device, the welding device can be compatible with the welding requirements of products of various specifications, thereby greatly reducing the use cost of the welding device.

Finally, it should be noted that: the above embodiments are only used for illustrating, rather than limiting the technical solutions of the present disclosure; although the present disclosure has been described in detail with reference to the preceding embodiments, it should be appreciated by those skilled in the art that: it is still possible to modify the technical solutions recited in the preceding embodiments, or to equivalently replace some or all of the technical features; and these modifications or replacements that do not deviate the nature of the corresponding technical solutions from the scope of the technical solutions of the embodiments of the present disclosure, should be covered by the scope of the claims and specification of the present disclosure. In particular, the technical features mentioned in the various examples can be combined in any manner as long as there is no structural conflict. The present disclosure is not limited to the particular embodiments disclosed herein, and includes all technical solutions falling within the scope of the claims.

## Claims

1. A welding tooling, comprising:
a carrier;
a first driving assembly disposed on the carrier;
a first guide rail that is disposed on the carrier and extends along a first direction;
a first slider that is slidably assembled with the first guide rail and is configured to be driven by the first driving assembly to move along the first guide rail; and
a plurality of welding tip assemblies arranged in an array, wherein at least one column of welding tip assemblies arranged along a second direction in the plurality of welding tip assemblies is fitted on the first slider and configured to move along with the first slider to change the spacing from other columns of welding tip assemblies, wherein, the second direction intersects the first direction.

2. The welding tooling according to claim 1, comprising:
a second driving assembly disposed on the carrier;
a second guide rail that is disposed on the carrier and extends along a second direction; and
a second slider that is slidably assembled with the second guide rail and is configured to be driven by the second driving assembly to move along the second guide rail;
wherein, at least one row of welding tip assemblies arranged along the first direction in the plurality of welding tip assemblies is fitted on the second slider, and is configured to move along with the second slider to change the spacing from other rows of welding tip assemblies.

3. The welding tooling according to claim 2, wherein
the second slider is provided with a third guide rail extending along the first direction, and the first slider is provided with a fourth guide rail extending along the second direction;
the plurality of welding tip assemblies comprise a first welding tip assembly of which the position is adjustable along both the first direction and the second direction, a second welding tip assembly of which the position is adjustable only along the first direction, a third welding tip assembly of which the position is adjustable only along the second direction, and a fourth welding tip assembly of which the position is not adjustable along both the first direction and the second direction, wherein the first welding tip assembly is slidably assembled with the third guide rail and the fourth guide rail, the second welding tip assembly is fixedly assembled with the first slider, the third welding tip assembly is fixedly assembled with the second slider, and the fourth welding tip assembly is fixedly disposed on the carrier and is independent from the first slider and the second slider.

4. The welding tooling according to claim 3, wherein
the first driving assembly comprises a first driving device and a first lead screw that is connected to the first driving device in a transmission mode, and the first slider is configured to be driven by the first lead screw to move along the first guide rail;
the second driving assembly comprises a second driving device and a second lead screw that is connected to the second driving device in a transmission mode, and the second slider is configured to be driven by the second lead screw to move along the second guide rail.

5. The welding tooling according to claim 3, wherein
the welding tooling comprises one first slider and one second slider, and the plurality of welding tip assemblies arranged in a 2 × 2 array, which are respectively the first welding tip assembly, the third welding tip assembly, the fourth welding tip assembly, and the second welding tip assembly arranged clockwise or counterclockwise.

6. The welding tooling according to claim 4, wherein
the welding tooling comprises two first sliders and one second slider; a screw rod of the first lead screw comprises a first forward thread section and a first reverse thread section, and the two first sliders are assembled on the first forward thread section and the first reverse thread section in one-to-one correspondence; and
the plurality of welding tip assemblies are arranged in a 2 × 3 array, which are respectively a first one of the first welding tip assemblies, the third welding tip assembly, a second one of the first welding tip assemblies, a first one of the second welding tip assemblies, the fourth welding tip assembly and a second one of the second welding tip assemblies arranged clockwise or counterclockwise.

7. The welding tooling according to claim 4, wherein
the welding tooling comprises two first sliders and one second slider; a screw rod of the first lead screw comprises a first screw pitch section and a second screw pitch section with different screw pitches, and the two first sliders are assembled on the first screw pitch section and the second screw pitch section in one-to-one correspondence; and
the plurality of welding tip assemblies are arranged in a 2 × 3 array, which are respectively a first one of the first welding tip assemblies, a second one of the first welding tip assemblies, the third welding tip assembly, the fourth welding tip assembly, a first one of the second welding tip assemblies and a second one of the second welding tip assemblies arranged clockwise or counterclockwise.

8. The welding tooling according to claim 4, wherein
the welding tooling comprises two first sliders and two second sliders; a screw rod of the first lead screw comprises a first forward thread section and a first reverse thread section, and the two first sliders are assembled on the first forward thread section and the first reverse thread section in one-to-one correspondence; a screw rod of the second lead screw comprises a second forward thread section and a second reverse thread section, and the two second sliders are assembled on the second forward thread section and the second reverse thread section in one-to-one correspondence; and
the plurality of welding tip assemblies are arranged in a 3 × 3 array, which are respectively a first one of the first welding tip assemblies, a first one of the third welding tip assemblies, a second one of the first welding tip assemblies, a first one of the second welding tip assemblies, a third one of the first welding tip assemblies, a second one of the third welding tip assemblies, a fourth one of the first welding tip assemblies, a second one of the second welding tip assemblies, and the fourth welding tip assembly located at the center of a matrix, that are arranged clockwise or counterclockwise.

9. The welding tooling according to claim 4, wherein
the welding tooling comprises two first sliders and two second sliders; a screw rod of the first lead screw comprises a first screw pitch section and a second screw pitch section with different screw pitches, and the two first sliders are assembled on the first screw pitch section and the second screw pitch section in one-to-one correspondence; a screw rod of the second lead screw comprises a third screw pitch section and a fourth screw pitch section with different screw pitches, and the two second sliders are assembled on the third screw pitch section and the fourth screw pitch section in one-to-one correspondence; and
the plurality of welding tip assemblies are arranged in a 3 × 3 array, which are respectively a first one of the first welding tip assemblies, a second one of the first welding tip assemblies, a first one of the third welding tip assemblies, a second one of the third welding tip assemblies, the fourth welding tip assembly, a first one of the second welding tip assemblies, a second one of the second welding tip assemblies, a third one of the first welding tip assemblies, and a fourth one of the first welding tip assemblies located at the center of a matrix, that are arranged clockwise or counterclockwise.

10. The welding tooling according to any one of claims 2 to 9, wherein
the second slider comprises a first portion and a second portion that are oppositely disposed and extend along the second direction, and a third portion that connects the first portion and the second portion and extends along the first direction, and the two second guide rails are disposed above the first portion and the second portion in one-to-one correspondence.

11. The welding tooling according to claim 10, comprising:
two pads that are disposed opposite to each other and fixedly disposed below the carrier, and the two second guide rails are disposed below the two pads in a one-to-one correspondence.

12. The welding tooling according to any one of claims 1 to 11, wherein
at least one column of welding tip assemblies in the plurality of welding tip assemblies is arranged side by side with the first slider in the first direction, and each welding tip assembly in the at least one column of welding tip assemblies is fitted on the first slider through an adapter member.

13. The welding tooling according to any one of claims 1 to 12, wherein
each of the plurality of welding tip assemblies comprises a mounting base, a welding tip body connected to the mounting base, and a dust extraction pipe connected to the welding tip body and in communication with an inner cavity of the welding tip body.

14. The welding tooling according to claim 13, wherein the dust extraction pipe is connected to the welding tip body through a fastener.

15. A welding device, comprising the welding tooling according to any one of claims 1 to 14.
